# EUROPEAN PATENT SPECIFICATION

(11) **EP 3 818 454 B1**
(45) Date of publication and mention of the grant of the patent: **19.06.2024**
(21) Application number: 19841363.5
(22) Date of filing: 12.07.2019
(51) Int. Cl.: G06F 16/27, G06F 11/30, G06F 11/34, G06F 16/2455

(54) **ASYNCHRONOUS CACHE COHERENCY FOR MVCC BASED DATABASE SYSTEMS**
ASYNCHRONE CACHE-KOHÄRENZ FÜR AUF MVCC BASIERTE DATENBANKSYSTEME
COHÉRENCE DE MÉMOIRE CACHE ASYNCHRONE POUR DES SYSTÈMES DE BASE DE DONNÉES BASÉES SUR MVCC

(30) Priority: 27.07.2018 US 201816047458
(43) Date of publication of application: 12.05.2021
(73) Proprietor: HUAWEI TECHNOLOGIES CO., LTD., Shenzhen, Guangdong 518129 (CN)
(72) Inventor: CAI, Le, Cupertino, California 95014 (US); CHEN, Jianjun, Santa Clara, California 95050 (US); SUN, Yang, Santa Clara, California 95050 (US); DU, Xiaolin, Santa Clara, California 95050 (US); CHEN, Jun, Santa Clara, California 95014 (US); CHEN, Yu, San Jose, California 95135 (US); PEI, Chunfeng, Santa Clara, California 95050 (US)
(74) Representative: Gill Jennings & Every LLP
(86) International application number: PCT/CN2019/095691
(87) International publication number: WO 2020/019995

(56) References cited:
- WO-A1-2016/122546
- US-A1- 2003 217 081
- US-A1- 2013 290 636
- US-A1- 2014 258 660
- US-A1- 2014 258 777
- US-B1- 9 519 664
- Anonymous: "Write-Ahead Logging", , 27 April 2018 (2018-04-27), pages 1-10, XP055818099, Retrieved from the Internet: URL:https://web.archive.org/web/2018042717 0021/https://sqlite.org/wal.html [retrieved on 2021-06-25]
- Kevin Wilkinson ET AL: "Maintaining Consistency of Client-Cached Data", , 1 January 1990 (1990-01-01), XP055287711, Retrieved from the Internet: URL:http://www.vldb.org/conf/1990/P122.PDF [retrieved on 2016-07-12]

## Description

### Field of the Invention

The present disclosure is related to distributed database systems in which multiple database instances access a shared memory, and in particular to maintaining correctness of the data among the multiple database instances.

### Background

A distributed database refers to a database accessed by multiple entities in a computing system (e.g., a cloud database). In a distributed database system, multiple instances or versions of the database are maintained by separate entities or masters. The multiple database instances are allowed to access shared data. This allows the database to still be available to other instances when any one database instance fails. When multiple database instances are given access to the shared data, the instances need to maintain cache (or buffer pool) coherency, otherwise obsolete data may be read and cause data inconsistency among the multiple data base versions.

In a conventional distributed database system, messaging among the database instances is used to synchronize the databases and maintain database coherency. When a page is loaded into a local buffer pool of one database instance, information related to the caching is broadcast to all the other database instances in a global communication. When a page is modified, another global communication is broadcast to invalidate the copies of the page in the other database instances. The broadcasting of the coherency information can introduce considerable network overhead that can cause bottlenecks in accesses to the database. This network overhead can reduce the bandwidth of access to the database.

US 2003/0217081 A1 describes functional client side data cache coherence distributed across database servers and clients. This system includes an application resident on a client operable to request access to data, and wherein the client is coupled to a local memory cache operable to store requested date. The client is coupled to a remote memory storage system, such as disk storage or network resources by a communication pathway. This remote memory storage system is operable to store data, process requests for specified data, retrieve the specified data from within the remote memory storage system, and transmit the requested data to the client with annotated version information. The data received by the client is verified as being coherent with any downstream linked information stored in the client's local memory cache. Otherwise, updated coherent data is requested, received and verified prior to being used by the client and its resident applications.

US 2014/0258660 A1 describes a method in which Providing a snapshot of a physical memory region as of a specified time includes: sending, from a first processor to a second processor, a request to generate a snapshot of the physical memory region as of the specified time; and generating, using the second processor, the snapshot of the physical memory region based at least in part on a known state of the physical memory region and log information about update activity of the physical memory region.

WILKINSON: "Maintaining Consistency of Client-Cached Data", http://www.vldb.org/conf/1990/P122.PDF, addresses the problem of cache consistency in a client-server database environment. The server provides shared database access for multiple client workstations and that client workstations may cache a portion of the database. Techniques are investigated to maintain the consistency of the client cache and to improve server throughput. A new cache consistency algorithm is proposed for client caches. The algorithm is a simple extension to two-phase locking and consists of three additional lock modes that must be supported by the server lock manager. For comparison, a second cache consistency algorithm is based on notify locks. A simulation model was developed to analyze the performance of the server under the two cache consistency algorithms and under noncaching two-phase locking. The results show that both consistency algorithms can significantly improve server performance over basic two-phase locking. The notify locks algorithm, at times, out-performs the cache locks algorithm. But, it is very sensitive to data contention and server load. Cache locks is always better than two-phase locking and is much more stable than notify locks under all conditions.

### Summary

Various examples are now described to introduce a selection of concepts in a simplified form that are further described below in the detailed description. The Summary is not intended to identify key or essential features of the claimed subject matter, nor is it intended to be used to limit the scope of the claimed subject matter.

The object of the invention is solved by the features of the independent claims. Further embodiments are the subject-matter of the dependent claims.

### Brief Description of the Drawings

FIG. 1 is a block diagram of a distributed database system according to an example embodiment.
FIG. 2 is a block diagram of another distributed database system according to an example embodiment.
FIG. 3 is a state diagram of an asynchronous cache coherence protocol according to an example embodiment.
FIG. 4 shows a timeline of database transactions and a semi-valid page list for a distributed database system according to an example embodiment.
FIG. 5 is a state diagram of the status of pages cached by a database node of a distributed database system according to an example embodiment.
FIG. 6 shows an example of generating an invalid map for database nodes of a distributed database system according to an example embodiment.
FIG. 7 is a flow diagram of database transaction processing by a distributed database system according to an example embodiment.
FIG. 8 is a block diagram illustrating circuitry for clients, servers, cloud based resources for implementing algorithms and performing methods according to example embodiments.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software in one embodiment. The software may consist of computer executable instructions stored on computer readable media or computer readable storage device such as one or more non-transitory memories or other type of hardware based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

In a conventional distributed database system, messaging among the multiple database instances is used to synchronize the databases and maintain database coherency. The coherency of the database is managed centrally. Coherence across the multiple database nodes is maintained globally using a global pool buffer. The central database management can include global messaging to perform global locking operations and global invalidation operations for example.

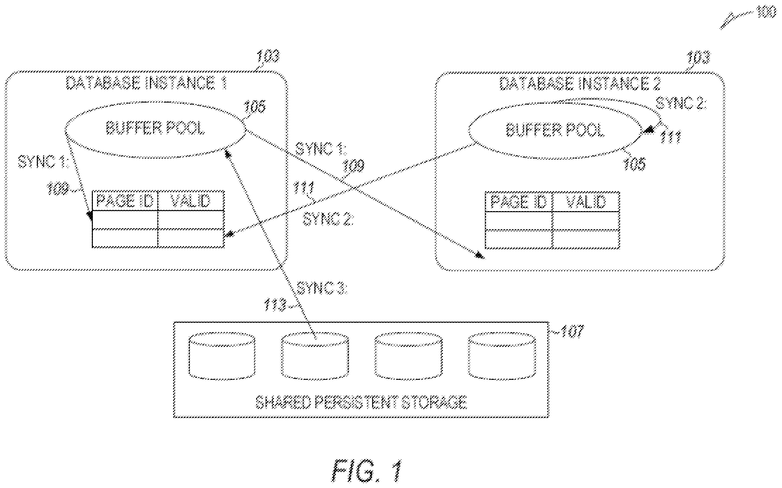

FIG. 1 is a block diagram of a distributed database system 100. The system includes database instance 1 and database instance 2. Each database instance can reside on a database node 103 or database master. Each database node can access shared data in persistent storage 107 that can include one or more servers. Only two database instances are shown in FIG. 1 for simplicity. A distributed database system may include tens or hundreds of database instances. Each database instance includes a buffer pool 105 that can be a cached memory that holds a copy or instance of the shared data. When multiple database instances access shared data, they need to maintain cache (or buffer pool) coherency, otherwise they may read obsolete data and cause data inconsistency.

FIG. 1 shows three cross-network operations that are used to maintain cache coherency among the database instances. The operations are synchronized among all of the database instances and impact all of the database instances. Sync operation 1 (SYNC 1) 109 is a register page operation. When a page is loaded into local buffer pool, the information is broadcasted to all the other database instances. For SYNC 1, FIG. 1 shows the page registration being placed in the local buffer pool of database instance 1 and broadcast to database instance 2. Alternatively, the loading is registered in a centralized database component, such as global buffer pool. One of the copies of the buffer pool can be designated as the global buffer pool. When a page is read by a database node, it is registered in global buffer pool.

Sync operation 2 (SYNC 2) 111 is an invalidate page operation. When a database transaction modifies a page, the database transaction needs to invalidate the database copies of the page in the buffer pools of the other database nodes before committing. "Committing" refers to the point in a transaction of updating of the data in the persistent storage where the data is made visible to the other database nodes. For SYNC 2, FIG. 1, shows a page being changed in database instance 2 and the page being invalidated in database instance 1. In the global pool example, if there is another node interested in the same page registered in the global pool, then a global lock is acquired for this page. The page is loaded from persistent storage and cached in local buffer pool. When another member accesses the page, the two members need to negotiate the status of global lock. If one member updates the page, before it commits the updating transaction, it invalidates the copy in the other member's local buffer pool.

Sync operation 3 (SYNC 3) 113 is a reload page operation. When a database node attempts to read an invalid page, a valid version of the page is loaded from other database nodes or from the persistent storage. For SYNC 3, FIG. 1 shows a page being loaded into database instance 1.

All of three of the SYNC operations involve network communication and can introduce considerable network overhead when executing a database transaction. For example, sync operation 2 can be the critical path for a database transaction by directly blocking a commit process. Overhead transactions such as theses can become the main bottlenecks to increasing throughput for a multi-master database system. The present inventors have recognized a need for improved communication in distributed database systems.

An improved approach to implement database coherency across the database nodes is to perform operations such as page registration and page invalidation asynchronously instead of as operations synchronized among all of the nodes of the database. The cache coherency information is communicated asynchronously and is delayed until it is needed for read consistency and cache coherence. Instead of the SYNC 1 page registration operation, cached pages are registered incrementally and on demand, without using global operations that can hinder higher system throughput. Instead of the SYNC 2 invalidation operation, cache invalidation operations are delayed until needed. The result is that the overhead associated with page registration is removed and page invalidation is removed from the critical path for database transactions. For the SYNC 3 page reload operation, the latest versions of pages are retrieved from persistent storage in an on-demand basis.

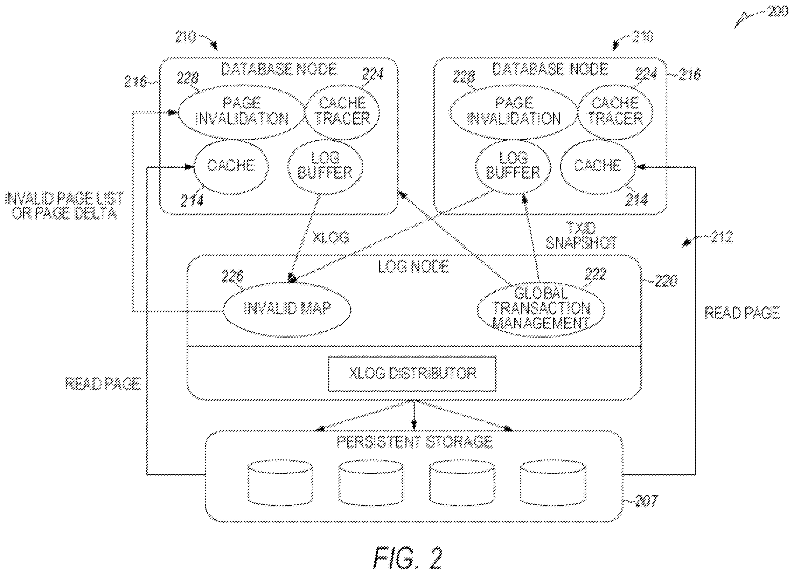

FIG. 2 is a block diagram of another distributed database system 200. The system supports computation-storage separation. The database system 200 includes one or more persistent storage devices 207 (e.g., servers), multiple database nodes 210, and a log node 212. A database node or log node can include one or more processors and a memory. The memory of a database node 210 includes a cache memory 214 to store a database instance. The database nodes receive queries (e.g., a structured query language or SQL queries) or one or more of update, insert, delete, and create operations from users. The data for the operations is provided from the cache memories of the database nodes, or from the persistent storage if the data is missed from the cache memories. Information needed for cache coherency is communicated between the database nodes 210 and the log node 212 asynchronously.

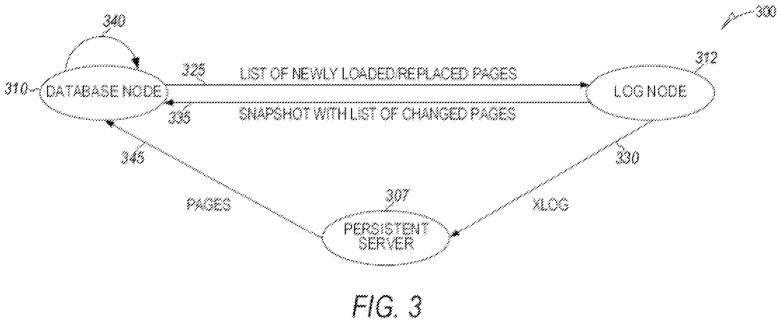

FIG. 3 is a state diagram 300 of an asynchronous cache coherence protocol. At 325, a database transaction is initiated by a processor of a database node 310 by sending a snapshot request to the log node 312. The snapshot request includes a list of pages in the cache memory of the database node that were either replaced or newly loaded.

At 330, the log node 312 sends log records (Xlog) to persistent storage 307. The log records include database transactions by all of the database nodes that were committed before the current new database transaction. When a database transaction modifies a page, it creates a log record. The log records are sent to the log node 312 when the database transaction commits. The log node 312 takes the log records and sends them to the persistent storage 307 where new versions of the data are created. The persistent storage 307 receives the log records from the log node 312 and stores them. The persistent storage 307 generates the data of database by replaying the log records and read page requests made to the persistent storage from the database nodes.

At 335, the log node 312 sends a snapshot response to the database node 310. The snapshot response includes the snapshot of the database. The snapshot is determined by the log records flushed to persistent storage. For example, if a total of 1,024,000 (1024K) log records are flushed to the persistent storage, the snapshot response will include a 1024K snapshot. The snapshot response also includes a list of changed pages of the database instances. At 340, a processor of the database node 310 updates the status of the pages in the cached memory of the database node 310 according to the snapshot response and performs the database transaction. The operations of the database transaction are only performed on this returned snapshot. Any concurrent changes by other database nodes are invisible to this transaction.

At 345, when a processor of the database node processor 310 needs to access data of a page indicated as invalid in the snapshot response, the database node 310 retrieves the version of the page in persistent storage 307. The persistent storage 307 applies the received log records and will return the latest version of the page.

Returning to FIG. 2, the database nodes can include a cache tracer component 224. The cache tracer component 224 can include software or firmware executed by the database node processor 216. The cache tracer component 224 can be used by a database node to trace or track the latest pages loaded from persistent storage servers and the replaced pages in the cache memory 214. For each database transaction, the cache tracer prepares two lists. One is a list of newly loaded pages and the other is a list of pages replaced since the last snapshot was acquired.

The log node 212 can include a global transaction management (GTM) component. The GTM component 222 can include software or firmware executed by the log node processor 220. The GTM component generates an ascending log snapshot number (LSN). The LSN is used in maintaining the snapshots. The database nodes can acquire a snapshot as a list of active transactions from the log node when the database transaction is initiated. The log node 212 may also use the LSNs to maintain a hash table to track pages cached in each of the database nodes.

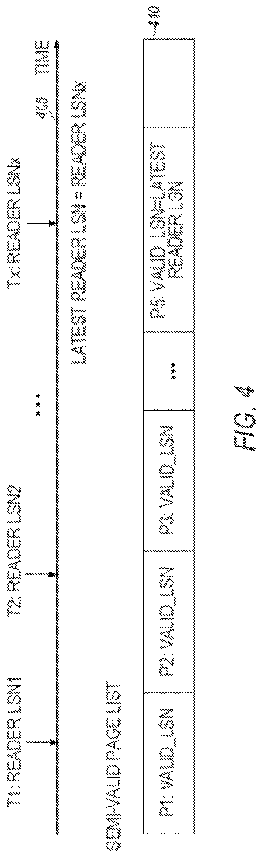

FIG. 4 shows a timeline 405 of database transactions or reader transactions T1, T2 ... Tx. The log node assigns a Reader LSN to each of the transactions (Reader LSN1, Reader LSN2 ... Reader LSNx). In certain embodiments, the Reader LSNs include a timestamp.

The log node 212 can include an invalid map component 226. The invalid map component 226 can be used by the log node to generate an invalid map as the list of invalid pages for a specific database node. Invalid pages are those pages cached by the database node that have been changed by the other database nodes. The invalid map is returned to the specific database node after those changes have been committed and the log records of those changes have been sent to persistent storage 207. The database nodes can include a page invalidation component 228. The page invalidation component 228 can be used by a database node to invalidate the cached pages according to the invalid map. When the database node 210 wants to access an invalid page, the corresponding page in persistent storage 207 is loaded.

Pages cached in a database node can be valid, semi-valid, or invalid. A page is valid if it was loaded by the database from persistent storage and it is not listed in an invalid map subsequently received from the log node. A page is marked as invalid if is included in an invalid map. A page is marked as semi-valid when it is first loaded into cache memory.

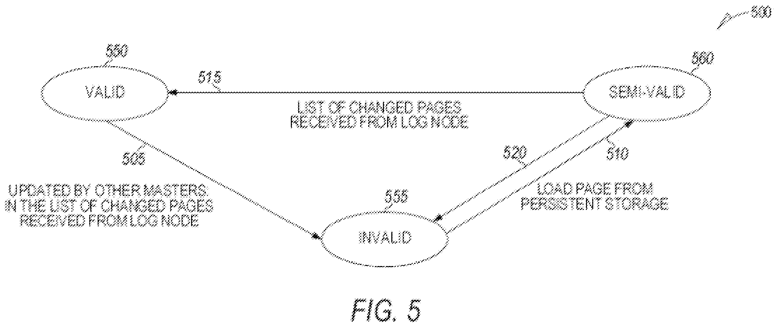

FIG. 5 is a state diagram 500 of the status of pages cached by a database node of the database system. At 505, a valid page 550 turns invalid when another database node modifies the page and the modification commits to the log node. Information of the changed page is included in the invalid map received from the log node. At 510, an invalid page 555 turns semi-valid when the database node tries to access the invalid page and the database node loads the corresponding page from persistent storage due to the invalid status. At 515, a semi-valid page 560 can turn valid, and at 520 a semi-valid page can turn invalid.

The database node keeps track of whether the semi-valid page turns valid or invalid using the lists of changed pages (invalid maps) received from the log node. When a database node receives a snapshot response from the log node it includes the invalid map or list of changed pages. If a semi-valid page is included in the list, then a change to the page occurred recently and the page status changes to invalid. If the semi-valid page is included in the list of newly loaded pages of the database node and is not in the returned changed page list, then the page status changes to valid. Pages that turn valid or invalid are removed the semi-valid list.

The cache tracer component 224 of a database node maintains a semi-valid page list. FIG. 4 shows an example of a semi-valid page list 410. The semi-valid page list is comprised of list pairs that include a page number and a Valid LSN (Px : Valid LSN). This Valid LSN can be the same or different for the list pairs and is the latest Reader LSN when the database node starts to load the corresponding page. This means the loaded page is valid for all snapshots having an LSN less than this Valid LSN. This is guaranteed in the asynchronous cache coherence protocol by having the log node check that all committed log records are already sent or flushed to persistent storage when any snapshot (and its Reader LSN) is returned to a database node.

When a database transaction is initiated by a database node, it uses the semi-valid page list to build the list of newly loaded pages to include in the snapshot request. Only those newly loaded pages are included in the list. Any pages picked by a previous transaction are excluded from the list of newly loaded pages.

In the case of a network failure, snapshot request messages or snapshot response messages may be lost and resent, or pages about to turn valid may be reloaded and flagged as semi-valid. The Valid LSNs of the pages in the semi-valid page list can be compared by the database node with the Reader LSN of the active database transaction. If the Valid LSNs of the semi-valid list are greater than or equal to the Reader LSN, then the page remains semi-valid. If the Valid LSN is less than the Reader LSN, the page in the list is invalid.

To generate an invalid map, the invalid map component 226 of the log node 212 maintains a hash table for cached pages of each database node. The invalid map component 226 may also maintain a separate list of pages changed for each database node since the last Reader LSN for each database node. Pages updated by the other database nodes are appended to this separate list of page. It should be noted that one page may have multiple entries in the list due to multiple updates occurring at different times.

When a database node sends a snapshot request with the newly loaded pages, the list of newly loaded pages includes the Valid LSNs of those pages. When the log node receives the list, the log node first inserts those pages into the hash table for the database node, and then generates the Reader LSN for the database transaction. The invalid map component 226 determines those pages that have a Valid LSN less than the Reader LSN and adds them to the invalid map. Those pages that have a Valid LSN greater than or equal to the Reader LSN become valid.

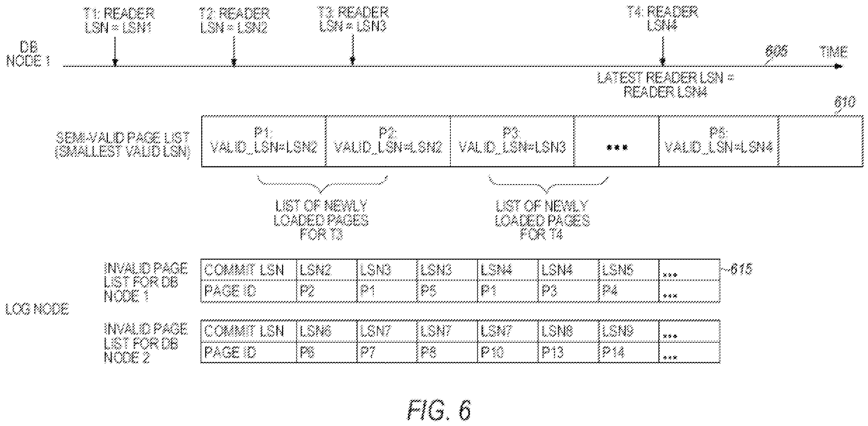

FIG. 6 shows an example of generating an invalid map for database nodes. A timeline 605 of database transactions (T1, T2, T3, T4) is shown for database (DB) node 1. For database transaction T3, the Reader LSN is LSN3 and the list of newly loaded pages for DB 1 for T3 is {(P 1, LSN2), (P2, LSN2)}. FIG. 6 also shows the semi-valid page list 610 of DB node 1. The elements of the semi-valid page list 610 include a page identifier (page ID P1, P2, P3 ... P5) and a smallest Valid LSN for the corresponding page.

FIG. 6 also shows invalid page lists maintained by the log node for DB node 1 and DB node 2. The invalid page list 615 for DB node 1 is a list of pages cached by DB node 1 that were recently changed. The elements of the list include a page ID and a Commit LSN. The invalid map component 226 compares the semi-valid list and the invalid page list to identify which semi-valid pages are changed between the Valid LSN and the Reader LSN.

For page P2, because the Valid LSN of the semi-valid page list is greater than or equal to the Commit LSN in the invalid page list, the version of P2 cached in DB node 1 is valid. The other versions of P2 in the other DB nodes will not be visible to DB node 1. For page P1, because the Valid LSN of the semi-valid page list 610 is less than the Commit LSN of the invalid page list 615, the version of P1 cached in DB node 1 may be old and the version of P1 in DB node 1 is invalid.

Reader LSNs are used by the log node 212 to determine which list elements in the invalid page list should be checked. For example, because the Reader LSN for T3 is LSN3, only first three elements of the invalid page list P2, P1, and P5 are checked. The elements with a Valid LSN greater than LSN3 (e.g., LSN4 and LSN5) are not checked because the page changes are invisible to transaction T3.

When database nodes send the list of newly loaded pages to the log node in the snapshot request, the database nodes can include a smallest Valid LSN for the newly loaded pages. This Valid LSN can be used by the log node to remove items in the invalid page lists. If a database node finds its last Reader LSN is too old (e.g., because no database transactions occur in the database node), it can send a list of newly loaded pages with an unrealistically large Valid LSN. This way, the list of changed pages maintained in the log node for the database node can be proactively truncated by the database node. This request can be issued periodically to avoid the situation in which some real snapshot requests are lost and the corresponding newly loaded page lists are not processed to determine the invalid page map. If the list of changed pages is not truncated, the loss of the list of newly loaded page lists will result in false invalid pages that trigger future accesses that will always result in loading data from persistent storage.

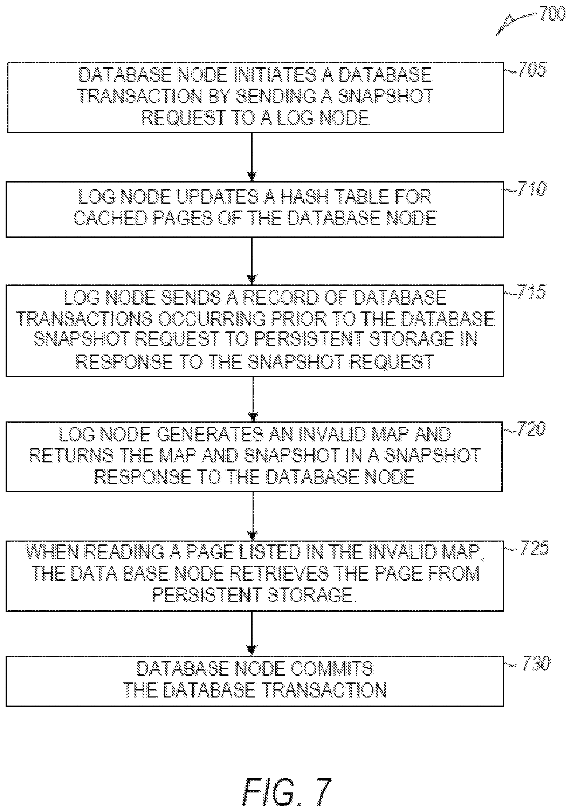

FIG. 7 is a flow diagram 700 of the database transaction processing by the distributed database system of FIG. 2. At 705, a database transaction is initiated by a database node sending a snapshot request to the log node. The snapshot request is to obtain a database snapshot and a Reader LSN. The request can include two lists: a list of pages newly added by the requesting database node, and a list of pages replaced by the requesting database node.

At 710, the log node updates a hash table for cached pages of each database node. At 715, the log node sends a record of database transactions occurring prior to the database snapshot request to persistent storage. The log node checks that log records of previously committed transactions have been flushed or sent to persistent storage servers before returning the snapshot and the invalid page list to the requesting database nodes.

At 720, the log node generates an invalid map (invalid page list) and returns the invalid map with the snapshot to the database node. At 725, when the database node reads a page indicated to be invalid in the invalid map, the database node retrieves the page from persistent storage. At 730, the database node commits the database transaction. When committing, log records are sent to the log node.

In a multi-version database system, a transaction acquires a snapshot of a database and the operations of the transaction only work on the acquired snapshot. Any concurrent changes happening within the system are invisible to this transaction. The transaction accesses cached data at a database node or data from persistent storage. The asynchronous cache coherency protocol guarantees accessed data is in the snapshot of the transaction or a newer snapshot.

All pages in a cache are the latest version or a snapshot version. No committed change happens to the cached pages before the transaction acquires the snapshot. Some cached pages become invalid, but no page in the cache is loaded by another transaction before the snapshot is acquired. Those pages in cache are marked as invalid either by the transaction or by another transactions having an older snapshot. New versions of the cached pages are acquired from persistent storage if those pages are accessed by the transaction.

If pages in cache memory of a first database node are loaded by other database nodes before the transaction of the first database node, those loaded pages are in the newly loaded list of the other database nodes. The returned invalid map of changed pages can verify if the pages are valid or invalid. If invalid the first database node retrieves the pages from persistent storage. The persistent storage always returns the latest version of a page because the log node flushes or sends log records of the previously committed transactions before returning the snapshot to the database node.

Some pages in cache of the first database node can be loaded by other database nodes during the transaction of the first database node. If those pages are loaded between the time of the sending of the snapshot request by the database node and the returning of snapshot response by the log node, the pages are semi-valid and they are retrieved from persistent storage if the Valid LSN of the pages is smaller (older) than the Reader LSN of the snapshot.

If those pages are loaded after the time of the sending of the snapshot response (that includes the snapshot and the Reader LSN), the pages are semi-valid but the Valid LSN of the pages is greater than or equal to (not older than) the Reader LSN of the snapshot, and the pages can be used in the transaction. Thus, the asynchronous cache coherency protocol guarantees the correct data is accessed in database transactions.

It can be seen that cache coherency is maintained across the multi-master database nodes. The asynchronous cache coherency protocol delays cache invalidation operation until needed, registers cached pages incrementally and on-demand without global locking, and retrieves the latest versions of pages from persistent storage on-demand. In comparison to conventional synchronized approaches to coherency, the asynchronous cache coherency approach reduces the network interaction needed for transaction committing and data access. This reduces network bottlenecks and can increase throughput.

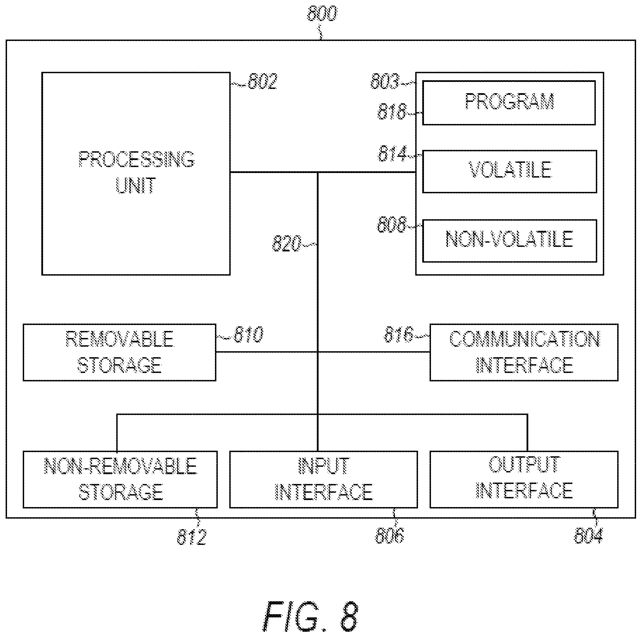

FIG. 8 is a block diagram illustrating circuitry for one or both of a database node and a log node for performing methods according to example embodiments. All components need not be used in various embodiments. For example, a database node and a log node may each use a different set of components.

One example computing device in the form of a computer 800 may include a processing unit 802, memory 803, removable storage 810, and non-removable storage 812. Although the example computing device is illustrated and described as computer 800, the computing device may be in different forms in different embodiments. For example, the computing device may instead be a smartphone, a tablet, smartwatch, or other computing device including the same or similar elements as illustrated and described with regard to FIG. 8. Devices, such as smartphones, tablets, and smartwatches, are generally collectively referred to as mobile devices or user equipment. Further, although the various data storage elements are illustrated as part of the computer 800, the storage may also or alternatively include cloud-based storage accessible via a network, such as the Internet or server based storage.

Memory 803 may include volatile memory 814 and non-volatile memory 808. Cache memory may be implemented using one or both of the volatile memory 814 and non-volatile memory 808. Computer 800 may include - or have access to a computing environment that includes - a variety of computer-readable media, such as volatile memory 814 and non-volatile memory 808, removable storage 810 and non-removable storage 812. Computer storage includes random access memory (RAM), read only memory (ROM), erasable programmable read-only memory (EPROM) and electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 800 may include or have access to a computing environment that includes input 806, output 804, and a communication connection 816. Output 804 may include a display device, such as a touchscreen, that also may serve as an input device. The input 806 may include one or more of a touchscreen, touchpad, mouse, keyboard, camera, one or more device-specific buttons, one or more sensors integrated within or coupled via wired or wireless data connections to the computer 800, and other input devices. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks. According to one embodiment, the various components of computer 800 are connected with a system bus 820.

Computer-readable instructions stored on a computer-readable medium are executable by the processing unit 802 of the computer 800, such as program 818. The program 818 in some embodiments comprises software that, when executed by the processing unit 802, performs coherency operations according to any of the embodiments included herein. A hard drive, CD-ROM, and RAM are some examples of articles including a non-transitory computer-readable medium such as a storage device. The terms computer-readable medium and storage device do not include carrier waves to the extent carrier waves are deemed too transitory. Storage can also include networked storage such as a storage area network (SAN). Computer program 818 may be used to cause processing unit 802 to perform one or more of the algorithms described herein.

In an example embodiment, the computer 800 includes an initiation module initiating a database transaction by sending a snapshot request from a database node to a log node, the snapshot request including a list of pages in a cache memory of the database node that were either replaced or newly loaded, a reception module receiving a snapshot response at the database node from the log node, wherein the snapshot response includes a snapshot of the database and a list of changed pages of the database instances, and an update module updating the status of the pages in cached memory of the database node according to the snapshot response and performing the database transaction. In some embodiments, the computer 800 may include other or additional modules for performing any one of or combination of steps described in the embodiments. Further, any of the additional or alternative embodiments or aspects of the method, as shown in any of the figures or recited in any of the claims, are also contemplated to include similar modules.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims. servers. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks. According to one embodiment, the various components of computer 800 are connected with a system bus 820.

Computer-readable instructions stored on a computer-readable medium are executable by the processing unit 802 of the computer 800, such as program 818. The program 818 in some embodiments comprises software that, when executed by the processing unit 802, performs coherency operations according to any of the embodiments included herein. A hard drive, CD-ROM, and RAM are some examples of articles including a non-transitory computer-readable medium such as a storage device. The terms computer-readable medium and storage device do not include carrier waves to the extent carrier waves are deemed too transitory. Storage can also include networked storage such as a storage area network (SAN). Computer program 818 may be used to cause processing unit 802 to perform one or more of the algorithms described herein.

In an example embodiment, the computer 800 includes an initiation module initiating a database transaction by sending a snapshot request from a database node to a log node, the snapshot request including a list of pages in a cache memory of the database node that were either replaced or newly loaded, a reception module receiving a snapshot response at the database node from the log node, wherein the snapshot response includes a snapshot of the database and a list of changed pages of the database instances, and an update module updating the status of the pages in cached memory of the database node according to the snapshot response and performing the database transaction. In some embodiments, the computer 800 may include other or additional modules for performing any one of or combination of steps described in the embodiments. Further, any of the additional or alternative embodiments or aspects of the method, as shown in any of the figures or recited in any of the claims, are also contemplated to include similar modules.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A database system comprising:
a persistent storage device (207);
a log node (212) including a memory and a processor; and
a plurality of database nodes (210), wherein a database node includes a cache memory (214) configured to store a database instance, and a processor configured to initiate (705) a database transaction by sending a snapshot request to the log node, the snapshot request including a list of pages that were either replaced or newly loaded in the cache memory;
wherein the log node processor is configured to send (720) a snapshot response to the database node, wherein the snapshot response includes a snapshot of the database comprising a list of active transactions and a list of changed pages of the database instances; and
wherein the database node processor is configured to update (725) the status of the pages in the cached memory according to the snapshot response and perform (730) the database transaction,
**characterized by**:
the pages of the database instance stored in the cache memory are marked as valid, semi-valid, or invalid wherein a page is valid if it was loaded by the database from persistent storage and it is not listed in a list of changed pages subsequently received from the log node; a page is marked as invalid if it is included in a list of changed pages and a page is marked as semi-valid when it is first loaded into cache memory;
wherein the database node processor is configured to: change a page status to semi-valid when loading the page from the persistent storage device; change a page status from semi-valid to invalid if the page is indicated as changed in the list of changed pages; and change a page status from semi-valid to valid if the page is a newly loaded page and the page is not indicated as changed in the changed page list.

2. The database system of claim 1, wherein the database node processor is further configured to: change a page status to semi-valid and assigning a valid log snapshot number, LSN, to the page when loading the page from the persistent storage device; and include a list of pages with the semi-valid page status and the valid LSN of the pages in the snapshot request; and the log node processor is configured to identify a page as invalid for the database node using a comparison of the valid LSN to a latest LSN for the page, wherein a page is invalid if its valid LSN is less than the latest LSN assigned to the page; and include identified invalid pages in the snapshot response.

3. The database system of claim 1 or 2, wherein the log node processor is configured to:
send a record of executed database transactions from the log node to a persistent storage device; and
send the snapshot response when records of database transactions executed prior to the initiated database transaction were sent to the persistent storage device by the log node.

4. The database system of any of claims 1 to 3, wherein the log node memory is configured to store a hash table for cached pages of the database node; and update the hash table in response to the snapshot request.

5. A computer-implemented method of database coherency in a system containing multiple database instances, the method comprising:
initiating (705) a database transaction by sending a snapshot request from a database node (210) to a log node (212), the snapshot request including a list of pages in a cache memory (214) of the database node that were either replaced or newly loaded;
receiving (720) a snapshot response at the database node from the log node, wherein the snapshot response includes a snapshot of the database comprising a list of active transactions and a list of changed pages of the database instances; and
updating (725) the status of the pages in cached memory of the database node according to the snapshot response and performing (730) the database transaction,
**characterized by**:
marking the pages of the database stored in the cache memory as valid, semi-valid, or invalid wherein a page is valid if it was loaded by the database from persistent storage and it is not listed in a list of changed pages subsequently received from the log node; a page is marked as invalid if it is included in a list of changed pages and a page is marked as semi-valid when it is first loaded into cache memory;
wherein updating status of the pages in cached memory further includes: changing a page status to semi-valid when the page is loaded from the persistent storage device; changing a page status from semi-valid to invalid if the page is indicated as changed in the list of changed pages; and changing a page status from semi-valid to valid if the page is a newly loaded page in the database node and the page is not indicated as changed in the changed page list.

6. The method of claim 5, further comprising changing, in the database node, a page status to semi-valid and assigning a valid log snapshot number, LSN, to the page when the page is loaded from a persistent storage device; including a list of pages with the semi-valid page status and the valid LSN of the pages in the snapshot request, wherein a page is invalid if its valid LSN is less than the latest LSN assigned to the page; and receiving, at the database node, identified invalid pages and the valid LSN in the snapshot response.

7. The method of claim 5 or 6, including identifying, by the log node, a page as invalid for the database node using a comparison of the valid LSN to a latest LSN for the page.

8. The method of any of claims 5 to 7, including:
sending a record of database transactions committed prior to the initiated database transaction from the log node to the persistent storage device; and
sending the snapshot response when the record is sent.

## Patentansprüche

1. Datenbanksystem, umfassend:
eine dauerhafte Speichervorrichtung (207);
einen Protokollknoten (212), der einen Speicher und einen Prozessor beinhaltet; und
eine Vielzahl von Datenbankknoten (210), wobei ein Datenbankknoten einen Cache-Speicher (214), der dazu konfiguriert ist, eine Datenbankinstanz zu speichern, und einen Prozessor, der dazu konfiguriert ist, eine Datenbanktransaktion durch Senden einer Snapshot-Anfrage an den Protokollknoten zu initiieren (705), beinhaltet, wobei die Snapshot-Anfrage eine Liste von Seiten beinhaltet, die entweder ersetzt oder neu in den Cache-Speicher geladen wurden;
wobei der Prozessor des Protokollknotens dazu konfiguriert ist, eine Snapshot-Antwort an den Datenbankknoten zu senden (720), wobei die Snapshot-Antwort einen Snapshot der Datenbank beinhaltet, der eine Liste aktiver Transaktionen und eine Liste geänderter Seiten der Datenbankinstanzen umfasst; und
wobei der Prozessor des Datenbankknotens dazu konfiguriert ist, den Status der Seiten im zwischengespeicherten Speicher gemäß der Snapshot-Antwort zu aktualisieren (725) und die Datenbanktransaktion durchzuführen (730),
**dadurch gekennzeichnet, dass**:
die im Cache-Speicher gespeicherten Seiten der Datenbankinstanz als gültig, halbgültig oder ungültig markiert werden, wobei eine Seite gültig ist, wenn sie von der Datenbank aus einem dauerhaften Speicher geladen wurde und nicht in einer Liste geänderter Seiten aufgeführt ist, die anschließend vom Protokollknoten empfangen wird; wobei eine Seite als ungültig markiert wird, wenn sie in einer Liste geänderter Seiten beinhaltet ist und wobei eine Seite als halbgültig markiert wird, wenn sie zum ersten Mal in den Cache-Speicher geladen wird;
wobei der Prozessor des Datenbankknotens zu Folgendem konfiguriert ist: einen Seitenstatus zu halbgültig zu ändern, wenn die Seite aus der dauerhaften Speichervorrichtung geladen wird; einen Seitenstatuts von halbgültig zu ungültig zu ändern, wenn die Seite in der Liste geänderter Seiten als geändert angezeigt wird; und einen Seitenstatus von halbgültig zu gültig zu ändern, wenn es sich bei der Seite um eine neu geladene Seite handelt und die Seite in der Liste geänderter Seiten nicht als geändert angezeigt wird.

2. Datenbanksystem nach Anspruch 1, wobei der Prozessor des Datenbankknotens ferner zu Folgendem konfiguriert ist: Ändern eines Seitenstatus zu halbgültig und Zuweisen einer gültigen Protokoll-Snapshot-Nummer, LSN, zur Seite, während die Seite von der dauerhaften Speichervorrichtung geladen wird; und Einschließen einer Liste von Seiten mit dem halbgültigen Seitenstatus und der gültigen LSN der Seiten in die Snapshot-Anfrage; und wobei der Prozessor des Protokollknotens zu Folgendem konfiguriert ist: Identifizieren einer Seite als ungültig für den Datenbankknoten unter Verwendung eines Vergleichs der gültigen LSN mit einer neuesten LSN für die Seite, wobei eine Seite ungültig ist, wenn ihre gültige LSN kleiner ist als die letzte der Seite zugewiesene LSN; und Einschließen identifizierter ungültiger Seiten in die Snapshot-Antwort.

3. Datenbanksystem nach Anspruch 1 oder 2, wobei der Prozessor des Protokollknotens zu Folgendem konfiguriert ist:
Senden einer Aufzeichnung ausgeführter Datenbanktransaktionen vom Protokollknoten an eine dauerhafte Speichervorrichtung; und
Senden der Snapshot-Antwort, wenn Aufzeichnungen von Datenbanktransaktionen, die vor der initiierten Datenbanktransaktion ausgeführt wurden, vom Protokollknoten an die dauerhafte Speichervorrichtung gesendet wurden.

4. Datenbanksystem nach einem der Ansprüche 1 bis 3, wobei der Speicher des Protokollknotens dazu konfiguriert ist, eine Hash-Tabelle für zwischengespeicherte Seiten des Datenbankknotens zu speichern, und die Hash-Tabelle als Reaktion auf die Snapshot-Anfrage zu aktualisieren.

5. Computerimplementiertes Verfahren für Datenbankkohärenz in einem System, das mehrere Datenbankinstanzen enthält, wobei das Verfahren Folgendes umfasst:
Initiieren (705) einer Datenbanktransaktion durch Senden einer Snapshot-Anfrage von einem Datenbankknoten (210) an einen Protokollknoten (212), wobei die Snapshot-Anfrage eine Liste von Seiten in einem Cache-Speicher (214) des Datenbankknotens beinhaltet, die entweder ersetzt oder neu geladen wurden;
Empfangen (720) einer Snapshot-Antwort vom Protokollknoten beim Datenbankknoten, wobei die Snapshot-Antwort einen Snapshot der Datenbank beinhaltet, der eine Liste aktiver Transaktionen und eine Liste geänderter Seiten der Datenbankinstanzen umfasst; und
Aktualisieren (725) des Status der Seiten im Cache-Speicher des Datenbankknotens gemäß der Snapshot-Antwort und Durchführen (730) der Datenbanktransaktion,
**dadurch gekennzeichnet, dass**:
die im Cache-Speicher gespeicherten Seiten der Datenbank als gültig, halbgültig oder ungültig markiert werden, wobei eine Seite gültig ist, wenn sie von der Datenbank aus einem dauerhaften Speicher geladen wurde und nicht in einer Liste geänderter Seiten aufgeführt ist, die anschließend vom Protokollknoten empfangen wird; wobei eine Seite als ungültig markiert wird, wenn sie in einer Liste geänderter Seiten beinhaltet ist und wobei eine Seite als halbgültig markiert wird, wenn sie zum ersten Mal in den Cache-Speicher geladen wird;
wobei das Aktualisieren des Status der Seiten im Cache-Speicher ferner Folgendes umfasst: Ändern eines Seitenstatus zu halbgültig, wenn die Seite aus der dauerhaften Speichervorrichtung geladen wird; Ändern eines Seitenstatuts von halbgültig zu ungültig, wenn die Seite in der Liste geänderter Seiten als geändert angezeigt wird; und Ändern eines Seitenstatus von halbgültig zu gültig, wenn es sich bei der Seite um eine neu geladene Seite im Datenbankknoten handelt und die Seite in der Liste geänderter Seiten nicht als geändert angezeigt wird.

6. Verfahren nach Anspruch 5, ferner Folgendes umfassend: Ändern, im Datenbankknoten, eines Seitenstatus zu halbgültig und Zuweisen einer gültigen Protokoll-Snapshot-Nummer, LSN, zur Seite, wenn die Seite von einer dauerhaften Speichervorrichtung geladen wird; Einschließen einer Liste von Seiten mit dem halbgültigen Seitenstatus und der gültigen LSN der Seiten in die Snapshot-Anfrage, wobei eine Seite ungültig ist, wenn ihre gültige LSN kleiner ist als die letzte der Seite zugewiesene LSN; und Empfangen, beim Datenbankknoten, identifizierter ungültiger Seiten und der gültigen LSN in der Snapshot-Antwort.

7. Verfahren nach Anspruch 5 oder 6, beinhaltend Identifizieren, durch den Protokollknoten, einer Seite als ungültig für den Datenbankknoten unter Verwendung eines Vergleichs der gültigen LSN mit einer neuesten LSN für die Seite.

8. Verfahren nach einem der Ansprüche 5 bis 7, Folgendes beinhaltend:
Senden einer Aufzeichnung von Datenbanktransaktionen, die vor der initiierten Datenbanktransaktion erfolgt sind, vom Protokollknoten an die dauerhafte Speichervorrichtung; und
Senden der Snapshot-Antwort, wenn die Aufzeichnung gesendet wird.

## Revendications

1. Système de base de données comprenant :
un dispositif de stockage persistant (207) ;
un noeud de journal (212) comportant une mémoire et un processeur ; et
une pluralité de noeuds de base de données (210), dans lequel un noeud de base de données comporte une mémoire cache (214) configurée pour stocker une instance de base de données, et un processeur configuré pour lancer (705) une transaction de base de données en envoyant une demande d'instantané au noeud de journal, la demande d'instantané comportant une liste de pages qui ont été remplacées ou nouvellement chargées dans la mémoire cache ;
dans lequel le processeur de noeud de journal est configuré pour envoyer (720) une réponse d'instantané au noeud de base de données, dans lequel la réponse d'instantané comporte un instantané de la base de données comprenant une liste de transactions actives et une liste de pages modifiées des instances de base de données ; et
dans lequel le processeur de noeud de base de données est configuré pour mettre à jour (725) l'état des pages dans la mémoire cache en fonction de la réponse d'instantané et effectuer (730) la transaction de base de données,
**caractérisé par** :
les pages de l'instance de base de données stockées dans la mémoire cache sont marquées comme valides, semi-valides ou invalides, dans lequel une page est valide si elle a été chargée par la base de données à partir d'un stockage persistant et si elle n'est pas répertoriée dans une liste de pages modifiées reçue ultérieurement du noeud de journal ; une page est marquée comme invalide si elle est incluse dans une liste de pages modifiées et une page est marquée comme semi-valide lors de son premier chargement dans la mémoire cache ;
dans lequel le processeur de noeud de base de données est configuré pour : modifier l'état d'une page en semi-valide lors du chargement de la page à partir du dispositif de stockage persistant ; modifier le statut d'une page de semi-valide à invalide si la page est indiquée comme modifiée dans la liste des pages modifiées ; et modifier l'état d'une page de semi-valide à valide si la page est une page nouvellement chargée et si la page n'est pas indiquée comme modifiée dans la liste des pages modifiées.

2. Système de base de données selon la revendication 1, dans lequel le processeur de noeud de base de données est en outre configuré pour : modifier l'état d'une page en semi-valide et attribuer un numéro d'instantané de journal valide, LSN, à la page lors du chargement de la page à partir du dispositif de stockage persistant ; et inclure une liste de pages avec le statut de page semi-valide et le LSN valide des pages dans la demande d'instantané ; et le processeur de noeud de journal est configuré pour identifier une page comme invalide pour le noeud de base de données à l'aide d'une comparaison du LSN valide avec un dernier LSN pour la page, dans lequel une page est invalide si son LSN valide est inférieur au dernier LSN attribué à la page ; et inclure les pages non valides identifiées dans la réponse d'instantané.

3. Système de base de données selon la revendication 1 ou 2, dans lequel le processeur de noeud de journal est configuré pour :
envoyer un enregistrement des transactions de base de données exécutées depuis le noeud de journal vers un dispositif de stockage persistant ; et
envoyer la réponse d'instantané lorsque des enregistrements de transactions de base de données exécutées avant la transaction de base de données initiée ont été envoyés au dispositif de stockage persistant par le noeud de journal.

4. Système de base de données selon l'une quelconque des revendications 1 à 3, dans lequel la mémoire du noeud de journal est configurée pour stocker une table de hachage pour les pages mises en cache du noeud de base de données ; et mettre à jour la table de hachage en réponse à la demande d'instantané.

5. Procédé mis en œuvre par ordinateur pour assurer la cohérence d'une base de données dans un système contenant plusieurs instances de base de données, le procédé comprenant :
le lancement (705) d'une transaction de base de données en envoyant une demande d'instantané d'un noeud de base de données (210) à un noeud de journal (212), la demande d'instantané comportant une liste de pages dans une mémoire cache (214) du noeud de base de données qui ont été soit remplacées soit nouvellement chargé ;
la réception (720) d'une réponse d'instantané au noeud de base de données depuis le noeud de journal, dans lequel la réponse d'instantané comporte un instantané de la base de données comprenant une liste de transactions actives et une liste de pages modifiées des instances de base de données ; et
la mise à jour (725) de l'état des pages dans la mémoire cache du noeud de base de données en fonction de la réponse d'instantané et la réalisation (730) de la transaction de base de données,
**caractérisé par** :
le marquage des pages des bases de données stockées dans la mémoire cache comme étant valides, semi-valides ou invalides, dans lequel une page est valide si elle a été chargée par la base de données à partir d'un stockage persistant et si elle n'est pas répertoriée dans une liste de pages modifiées reçue ultérieurement du noeud de journal ; une page est marquée comme invalide si elle est incluse dans une liste de pages modifiées et une page est marquée comme semi-valide lors de son premier chargement dans la mémoire cache ;
dans lequel l'état de mise à jour des pages mises en cache comporte en outre : la modification de l'état d'une page en semi-valide lorsque la page est chargée à partir du dispositif de stockage persistant ; la modification du statut d'une page de semi-valide à invalide si la page est indiquée comme modifiée dans la liste des pages modifiées ; et la modification de l'état d'une page de semi-valide à valide si la page est une page nouvellement chargée dans le noeud de base de données et si la page n'est pas indiquée comme modifiée dans la liste des pages modifiées.

6. Procédé selon la revendication 5, comprenant en outre la modification, dans le noeud de base de données, d'un état de page en semi-valide et l'attribution d'un numéro d'instantané de journal valide, LSN, à la page lorsque la page est chargée à partir d'un dispositif de stockage persistant ; l'inclusion d'une liste de pages avec l'état de page semi-valide et le LSN valide des pages dans la demande d'instantané, dans lequel une page est invalide si son LSN valide est inférieur au dernier LSN attribué à la page ; et la réception, au niveau du noeud de base de données, des pages invalides identifiées et du LSN valide dans la réponse d'instantané.

7. Procédé selon la revendication 5 ou 6, comportant l'identification, par le noeud de journal, d'une page comme invalide pour le noeud de base de données en utilisant une comparaison du LSN valide avec un dernier LSN pour la page.

8. Procédé selon l'une quelconque des revendications 5 à 7, comportant :
l'envoi d'un enregistrement de transactions de base de données validées avant la transaction de base de données initiée depuis le noeud de journal vers le dispositif de stockage persistant ; et
l'envoi de la réponse instantanée lorsque l'enregistrement est envoyé.
